# EUROPEAN PATENT SPECIFICATION

(11) **EP 3 353 398 B1**
(45) Date of publication and mention of the grant of the patent: **29.04.2020**
(21) Application number: 16795139.1
(22) Date of filing: 13.09.2016
(51) Int. Cl.: F01P 5/12, F04D 13/02, F04D 13/06, F04D 15/00, F16D 27/10

(54) **PUMP GROUP WITH ELECTRIC DRIVE AND WITH MECHANICAL DRIVE**
PUMPENGRUPPE MIT ELEKTRISCHEM ANTRIEB UND MIT MECHANISCHEM ANTRIEB
GROUPE POMPE À ENTRAÎNEMENT ÉLECTRIQUE ET À ENTRAÎNEMENT MÉCANIQUE

(30) Priority: 24.09.2015 IT UB20153844
(43) Date of publication of application: 01.08.2018
(73) Proprietor: Industrie Saleri Italo S.P.A., 25065 Lumezzane, Brescia (IT)
(72) Inventor: PEDERSOLI, Marco, I-25065 Lumezzane (Brescia) (IT); SURACE, Alfonso, I-25065 Lumezzane (Brescia) (IT); MENSI, Luca, I-25065 Lumezzane (Brescia) (IT)
(74) Representative: Gamba, Alessandro
(86) International application number: PCT/IB2016/055448
(87) International publication number: WO 2017/051283

(56) References cited:
- WO-A1-2013/049919
- WO-A2-2009/129050
- WO-A2-2012/142016

## Description

This invention relates to a pump group for a vehicle cooling system, preferably for cooling an engine, for example an internal combustion engine.

As is known, during normal use of an engine, it is advisable to vary the cooling intensity.

For example, intense cooling is appropriate when the engine is working at full capacity, in towing conditions, climbing uphill or operating in high ambient temperatures.

In other operating conditions, it is advisable that cooling not be accentuated, for example when starting the engine or after use.

At the state of the art, cooling pumps, that address this need, are known.

In fact, cooling pumps are known for electric drive vehicles in which an electric drive regulates the rotation speed of the impeller and therefore the quantity of coolant it circulates in the cooling system.

Unfortunately, these pumps, although they are extremely versatile in their application and in the possibilities of managing the rotation thanks to the dedicated electronic control, they typically have low power delivery, limited by the electrical power provided by the vehicle's electrical system.

Furthermore, these pumps do not have a "fail-safe" feature in case of failure, i.e., the possibility of emergency operation when the electric motor has suffered a breakdown.

Mechanically driven pumps are also known in which the rotation of the impeller is linked to the number of revolutions of the internal combustion engine; in these solutions, the regulation of the quantity of coolant is transferred to specific regulation elements, placed upstream and downstream of the impeller, suitable to change the passage section of the circuit and thus varying the flow rate of coolant.

Unfortunately, although these solutions are suitable to deliver high powers and are particularly reliable, they have less versatile cooling management, linked to the engine speed and the characteristics of the regulation element, and are typically over-dimensioned.

Furthermore, in a "post-run" configuration, i.e., with the engine off, there is no cooling.

Finally, dual-drive pumps are also known, i.e., comprising both an electric drive that a mechanical drive.

Unfortunately, these pumps have a particularly complex management of the two drives, as well as an articulated structure.

The purpose of this invention is to provide a pump group for a vehicle cooling system, for example for an internal combustion engine, that satisfies the above-mentioned needs and overcoming the mentioned drawbacks.

This purpose is achieved by a pump group realised according to claim 1. The claims dependent on this refer to variants of preferred embodiments having further advantageous aspects.

The object of this invention is described below in detail, with the help of the accompanying figures, in which:

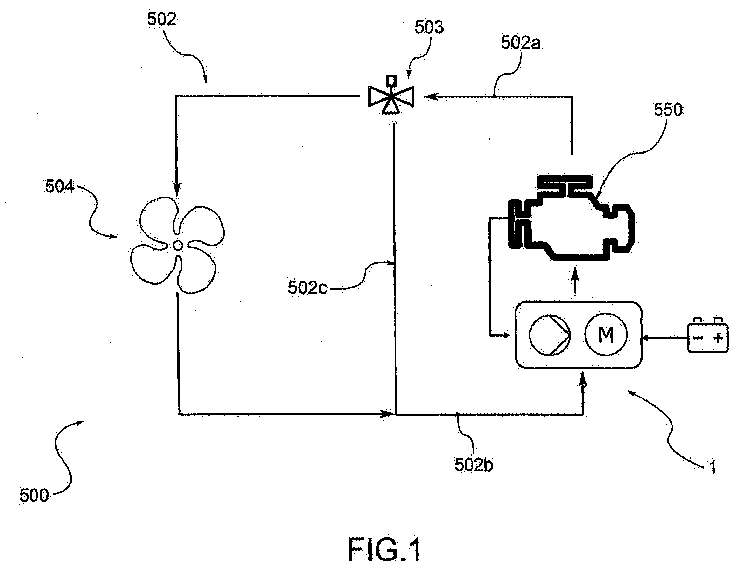

- Figure 1 shows a diagram of a vehicle cooling system according to a possible embodiment;

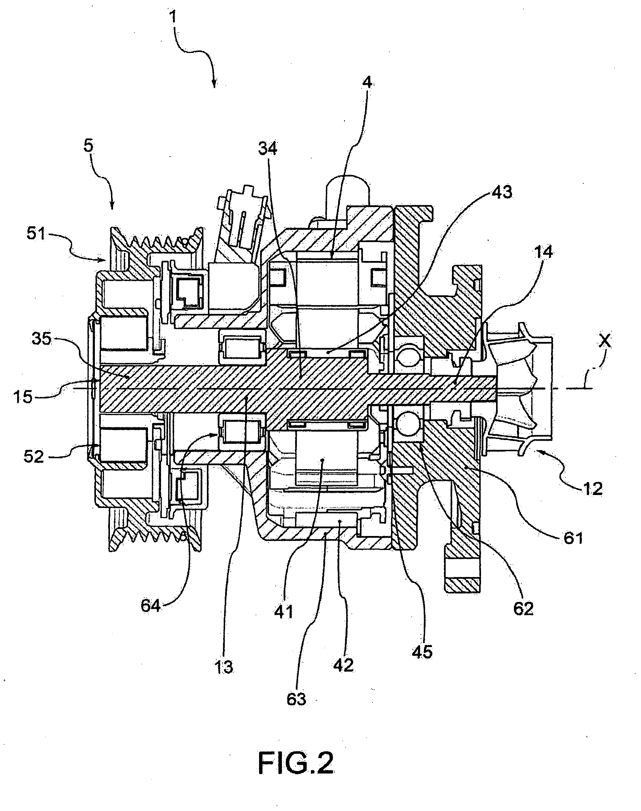

- Figure 2 is a sectional view of a pump group, provided for illustrative purposes;

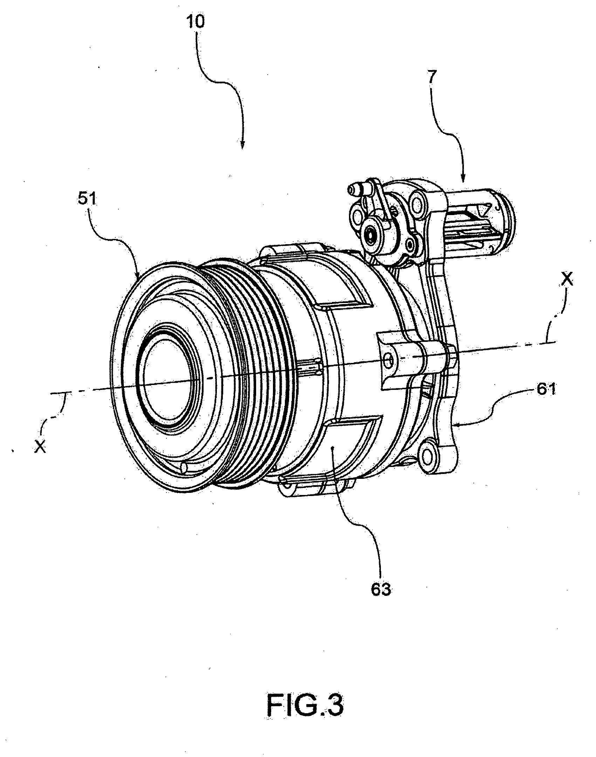

- Figure 3 represents a pump group according to an embodiment of this invention;
- Figure 4 shows a sectional view of the pump group of Figure 3, in which the components of a mechanical drive with electromagnetic pulley are evident;
- Figure 5 shows a sectional view of the pump group of Figure 3, in which the components of an electric drive are evident;
- Figure 6 contains a graph that represents the operating phases of a pump group according to a preferred embodiment and, in particular, illustrates the trend of the rotation speed of the impeller as a function of the rotation speed of the electric drive and the mechanical drive.

With reference to the aforesaid tables, reference number 1 identifies, in its totality, a pump of a cooling system 500 for an engine 550, preferably an internal combustion engine, according to an embodiment variant of the invention.

The cooling system 500 comprises a circuit 502 for the transport of the coolant, a thermostat 503 and a radiator 504. The circuit 502 has an output branch 502a, in which passes the liquid to be cooled, placed between the engine 550 and the radiator 504, a return branch 502b, in which the cooled liquid passes, placed between the radiator 504 and the pump 1, and a by-pass branch 502c that connects the output branch 502a with the return branch 502b, bypassing the radiator 504. The thermostat 503 is typically placed along the output branch 502a, from which the by-pass branch 502c starts.

The pump 1 comprises a pump group 10, which comprises an impeller 12, and a pump body comprising an impeller chamber, in communication with the cooling circuit 502 of the system 500. The pump group 10 engages the pump body so that the impeller is housed in the impeller chamber, so as to move the coolant in the circuit.

For example, the pump body is made as a body in its own right, on which the pump group is applied, and the entire assembly is connected to the cooling circuit and, typically, applied to the engine; in further embodiments, the pump body is made as a portion of the internal combustion engine portion and the pump group is thus applied directly to the engine.

The impeller 12, drivable in rotation around a rotation axis X, is for example of the radial type, i.e., it requires that the incoming liquid flow has an overall substantially axial direction and the outgoing liquid flow has a radial direction.

The pump group 1 further comprises a shaft 13, which extends along the rotation axis X, between an impeller end 14 and an opposite end 15; the impeller 2 is mounted on the shaft 13, in correspondence of the impeller end 14, and is preferably keyed to this.

The pump group 10 provides a dual drive, i.e., drivable both mechanically and electrically. For this purpose, the pump group 10 comprises an electric drive 4 and a mechanical drive 5.

The shaft 13 comprises an electric drive portion 34 suitable to receive the action of the electric drive 4 and a mechanical drive portion 35 suitable to receive the action of the mechanical drive 5.

Preferably, the mechanical drive portion 35 is located at the end 15 of the shaft 13, opposite the impeller end 14, while the electric drive portion 34 is located between the impeller end 14 and mechanical drive portion 35.

The mechanical drive 5 comprises a pulley 51 connected to a transmission belt, for example by means of a kinematic chain, to the drive shaft.

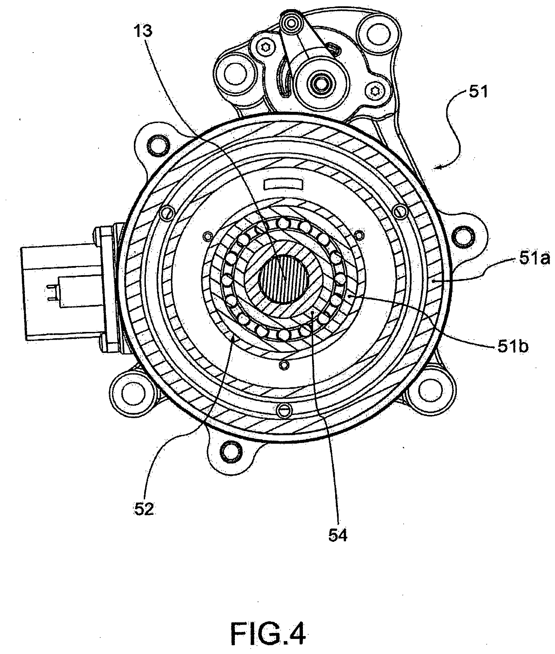

The pulley 51 is an electromagnetic pulley, normally engaged (Figure 4).

In particular, the pulley 51 comprises an outer ring 51a on which is mounted the transmission belt, an inner ring 51b and an intermediate release mechanism that comprises an intermediate coil. In this embodiment, the inner ring 51b constitutes the drive ring of a first one-way coupling 52, further comprising a driven ring 54, integrally mounted in rotation on the mechanical drive portion 35 of the shaft 13.

Normally, i.e., when the electromagnetic pulley 51 is not electrically energised, the outer ring 51a is integral in rotation with the inner ring 51b.

In this pulley-disabled configuration, if the inner ring 51b has a rotation speed greater than the driven ring 54, the shaft 13 is driven in rotation mechanically.

When the electromagnetic pulley 51 is activated, i.e., the coil is electrically energised, the release mechanism disengages the outer ring 51a from the inner ring 51b, so that the outer ring 51a, even though driven in rotation by the belt, does not transmit any rotation to the inner ring 51b and thus the shaft 13.

Preferably, the one-way coupling 52 also includes a rolling bearing, for example a roller bearing, having rolling bodies placed between the driven ring and the drive ring.

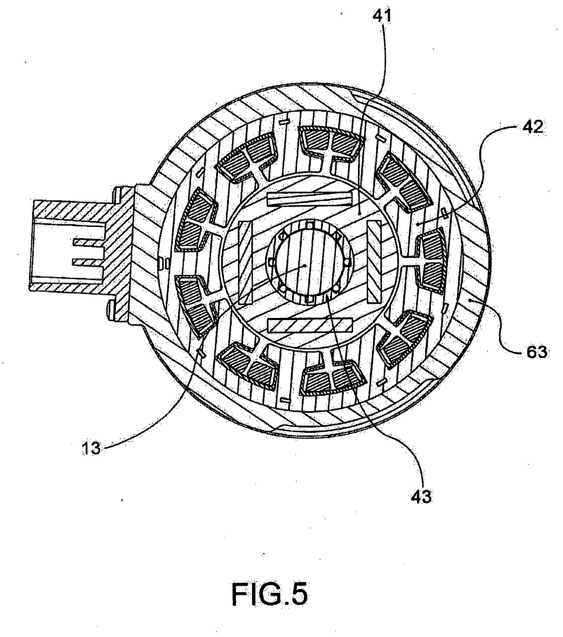

The electric drive 4 comprises an electric motor comprising a rotor 41, supported by the shaft 13, a stator 42 fixed coaxially to the rotor 41 and a second one-way coupling 43 operatively disposed between the rotor 41 and the shaft 13 (Figure 5).

In particular, the second one-way coupling 43 is mounted on the electric drive portion 34 of the shaft 13; the rotor 41 is in turn mounted on the second one-way coupling 43, while the stator 42, fixed, surrounds the rotor.

Operatively, the second one-way coupling 43 is identical to the first one-way coupling 52.

In particular, the electric drive portion 34 is driven in rotation by the rotor 41 when the rotation speed of the rotor 41 is greater than the rotation speed of the shaft 13; in this case, the shaft 13 is driven in rotation electrically.

Preferably, the second one-way coupling 43 also includes a rolling bearing, for example a needle roller bearing.

Externally, from the impeller end 14 towards the opposite end 15, the pump group 10 comprises, preferably, a support plate 61 intended for the connection of the pump group 10 to the motor or to the motor support.

The support plate 61 is hollow and is crossed by the shaft 13, from which it protrudes, from one side, the impeller end 14 and the impeller 12 mounted on this.

Preferably, the support plate 61 is internally provided with a seat for a rolling bearing 62, for example ball bearings, for supporting the shaft 13.

Furthermore, the pump group 10 comprises a casing 63, joined to the support plate 61.

The casing 63 contains and supports the stator 42 and preferably houses a further rolling bearing 64, for example a roller bearing, for supporting the shaft 13. For example, the bearing 64 is joined to the electric drive portion 34.

From the casing 63, on the opposite side to the impeller 12, protrudes the mechanical drive portion 15; the first one-way coupling 52 is thus placed outside the casing 63, as well as, of course, the pulley 51.

Furthermore, the pump group 10 comprises an electronic control device 45 suitable to command the actuation of the electric motor and any other electrically commandable components, for example constituted by an electronic card.

Preferably, the control device 45 is housed in proximity of the impeller 12, for example in contact with the support plate 61, so as to allow a good heat dissipation.

In addition, according to a preferred embodiment the pump group 10 includes a throttle valve 7, insertable in the pump body so as to be disposed along an output duct from the impeller chamber.

The valve 7 is commandable by means of an actuator (not shown), for example electric, hydraulic or vacuum, preferably commandable by the control device 45.

The characteristics of this valve are illustrated in documents EP2534381, EP13188771, EP13801735, WO2O15/059586 and BS2014A000171 in the name of the Applicant.

According to a further embodiment, the pump group 10 also comprises, upstream from the impeller 12, a regulation cartridge suitable to regulate the amount of coolant moved towards the impeller 12.

The characteristics of said shutter cartridge are illustrated for example in document WO2O15/004548 in the name of the Applicant.

The electric drive 4 and the electromagnetic pulley 51 are electronically controlled as a function of the occurrence of certain conditions during the use of the vehicle.

In a normal configuration, the pulley 51 is not energised and the electric drive 4 is deactivated, so the shaft 13 is driven only mechanically.

For example, when the vehicle is started and the engine is still cold (so-called "warm-up" configuration), the electromagnetic pulley 51 is activated, so as to disengage the shaft 13 from the mechanical drive, while the electric drive 4 is left deactivated.

The impeller 12 thus remains stopped, the liquid does not circulate in the circuit and the engine warms up more quickly.

According to a further example, in high load conditions, for example when the vehicle is towing a trailer or climbing a hill, typically at a low speed (and thus, with low engine revolutions), the electric drive 4 is activated so as to bring the shaft 13 in rotation at a rotation speed greater than the pulley 51.

In this way, the impeller 12 rotates at a higher rotation speed than that which would make the mechanical drive available.

Advantageously, in this configuration, the first one-way coupling disengages the shaft 13 in rotation from the outer ring 51a of the pulley, decreasing the masses driven in rotation by the electric drive.

According to a further example, after using the vehicle, if the coolant is still very hot, the electric drive 4 is activated so as to bring the shaft 13 in rotation.

In this way, the impeller 12 rotates at a predetermined rotation speed, while the mechanical drive is completely inactive, because the engine is stopped.

In this case as well, the first one-way coupling disengages the shaft 13 in rotation from the outer ring 51a of the pulley, decreasing the masses driven in rotation by the electric drive.

In general, then, the electric drive 4 is activated every time that it is necessary to increase cooling capacity, independently of the mechanical drive 5, constrained to the engine speed.

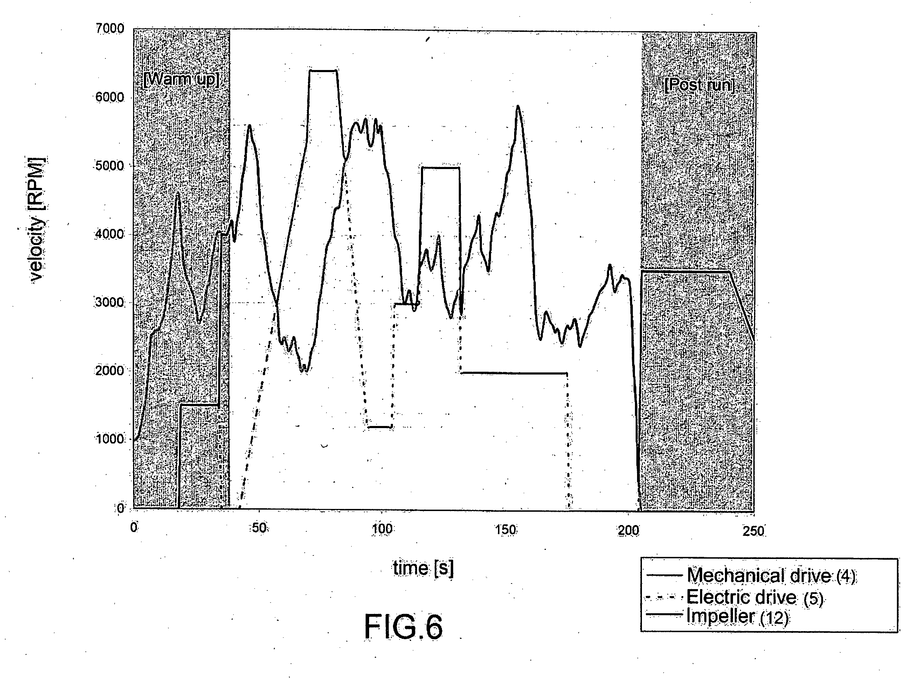

By way of example, Figure 6 shows a work cycle of the pump group 10. In particular, it shows the trend over time of the rotation speed of the impeller 12 as a function of the rotation 'speed induced by the electric drive 4 and by the drive mechanical 5.

The diagram therefore shows several work phases of the pump group 10 in which the impeller 12 is moved by the mechanical drive 5 and other phases of work in which the impeller 12 is instead moved by the electric drive 4.

In particular, the last time phase shown on the graph represents a "post run" phase, in which the internal combustion engine 550 is off and there is no mechanical drive, but the rotation of the impeller 12 is ensured by the electric drive 4.

Innovatively, the pump group of this invention satisfies the cooling needs of the engine and overcomes the drawbacks referred to above.

First of all, advantageously, the pump group according to the invention is very flexible, as it responds to the cooling needs of the vehicle as a function of the actual requirement and not as a function of the engine speed or the available electric power of the system.

Moreover, advantageously, the impeller (and the impeller chamber with the volute) is more compact and not over-dimensioned, and always operating under optimum yield conditions with respect to the known pump groups, where the impeller is often over-dimensioned to compensate for the scant flexibility of mechanical pumps and limited power of electric pumps.

Moreover, advantageously, the pump group is even able to avoid cooling action, even though the engine is running, when, for example, in "warm-up" conditions, it is appropriate to heat the engine.

Advantageously, moreover, the pump group has a "fail-safe" feature and, in fact, in the event of a failure of the electric drive, thanks to the mechanical drive and the second one-way coupling, it continues to ensure the movement of the impeller.

According to a further advantageous aspect, the pump group is operative in "post-run" conditions, i.e., with the engine off.

A further advantageous aspect consists in the fact that the pump group absorbs less power than common mechanical pumps.

Moreover, advantageously, the second one-way coupling, in a configuration in which the impeller is brought in rotation by the mechanical drive, allows that the rotor is not driven in rotation by the shaft; therefore, no magnetic friction is produced (and the rotor-stator assembly does not work as an electric generator).

Advantageously, moreover, the transition from electric drive to mechanical drive and vice versa is mechanically managed by the one-way couplings. Therefore, advantageously, the electronic management of the pump group is very simple.

It is clear that one skilled in the art, in order to meet contingent needs, may make changes to the pump group, all contained within the scope of protection defined by the following claims.

Moreover, each of the variants described as belonging to a possible embodiment can be realised independently of the other variants described.

## Claims

1. Pump group (1) for a cooling system (500) of an engine (550) of a vehicle, comprising:
- an impeller (12) rotating around an axis of rotation (X) ;
- a shaft (13), which extends along said axis of rotation (X), on which the impeller (12) is mounted to be jointly rotatable with the shaft;
- a mechanical drive (4) comprising a first one-way coupling (52) mounted on the shaft (13) and a pulley (51) mounted on said first coupling (52);
- an electric drive (5) including a second one-way coupling (43) mounted on the shaft (13), a rotor (41) mounted on the second coupling (43) and a fixed stator (42) coaxial to the rotor (41);
wherein the pulley (51) is an electromagnetic pulley normally engaged with the mechanical drive and electrically excitable to disengage the mechanical drive (5) from the shaft (13).

2. Pump group according to claim 1, wherein the pulley (51) comprises an outer ring (51a) designed to engage a transmission belt, an inner ring (51b) of the first one-way coupling (52) and an intermediate release mechanism which comprises an intermediate coil, said coil being electrically excitable to rotatably disengage the outer ring (51a) from the inner ring (51b).

3. Pump group according to claim 1 or 2, wherein the one-way coupling (52) also comprises a rolling bearing for the support in rotation of the shaft (13).

4. Pump group according to any of the previous claims, comprising an outer casing (63), said stator (42) being supported by the casing (63).

5. Pump group according to any of the previous claims, wherein the second one-way coupling (43) also comprises a rolling bearing for the support in rotation of the shaft (13) .

6. Pump group according to any of the previous claims, comprising an electronic control device (45) to command the electric drive (4) and the electromagnetic pulley (51), said control device (45) being placed on board the pump group (10).

7. Pump group according to claim 6, wherein the control device (45) is an electronic circuit supported by a support plate (61) designed for connection to the motor for the support of the pump group (10), from which the impeller (12) protrudes.

8. Pump group according to any of the previous claims, comprising a throttle valve (7) placed on board.

9. Cooling pump (1) comprising:
- a pump body having an impeller chamber; and
- a pump group (10) according to any of the previous claims, coupled to the pump body so that the impeller (12) is housed in the impeller chamber.

10. Pump according to claim 9, wherein the pump body is separated from the engine and connectable thereto to be supported in position.

11. Pump according to claim 9, wherein the pump body is a portion of the engine.

## Patentansprüche

1. Pumpengruppe (1) für ein Kühlsystem (500) eines Motors (550) eines Fahrzeugs, umfassend:
- einen Impeller (12), der sich um eine Drehachse (X) dreht;
- einen Schaft bzw. eine Welle (13), die sich entlang der Drehachse (X) erstreckt, auf der der Impeller (12) montiert ist, um zusammen mit der Welle drehbar zu sein;
- einen mechanischen Antrieb (4), umfassend eine erste Einwegkupplung (52), die auf der Welle (13) montiert ist, und eine Riemenscheibe (51), die auf der ersten Kupplung (52) montiert ist;
- einen elektrischen Antrieb (5), beinhaltend eine zweite Einwegkupplung (43), die auf der Welle (13) montiert ist, einen Rotor (41), der auf der zweiten Kupplung (43) montiert ist, und einen feststehenden Stator (42), der koaxial zu dem Rotor (41) ist; wobei die Riemenscheibe (51) eine elektromagnetische Riemenscheibe ist, die normal mit dem mechanischen Antrieb in Eingriff steht und elektrisch erregbar ist, den mechanischen Antrieb (5) von der Welle (13) zu lösen bzw. außer Eingriff zu bringen.

2. Pumpengruppe nach Anspruch 1, wobei die Riemenscheibe (51) einen äußeren Ring (51a), der ausgelegt ist, mit einem Übertragungsriemen in Eingriff zu kommen, einen inneren Ring (51b) der ersten Einwegkupplung (52) und einen intermediären Auslösemechanismus umfasst, der eine intermediäre Spule umfasst, wobei die Spule elektrisch erregbar ist, den äußeren Ring (51a) drehbar von dem inneren Ring (51b) zu lösen bzw. außer Eingriff zu bringen.

3. Pumpengruppe nach Anspruch 1 oder 2, wobei die Einwegkupplung (52) auch ein Wälzlager für das drehende Stützen bzw. Tragen der Welle (13) umfasst.

4. Pumpengruppe nach einem der vorhergehenden Ansprüche, umfassend ein äußeres Gehäuse (63), wobei der Stator (42) von dem Gehäuse (63) gestützt bzw. getragen ist.

5. Pumpengruppe nach einem der vorhergehenden Ansprüche, wobei die zweite Einwegkupplung (43) auch ein Wälzlager für das drehende Stützen bzw. Tragen der Welle (13) umfasst.

6. Pumpengruppe nach einem der vorhergehenden Ansprüche, umfassend eine elektronische Steuer- bzw. Regelvorrichtung (45) zum Kommandieren bzw. Steuern des elektrischen Antriebs (4) und der elektromagnetischen Riemenscheibe (51), wobei die Steuer- bzw. Regelvorrichtung (45) an Bord der bzw. geräteseitig der Pumpengruppe (10) platziert ist.

7. Pumpengruppe nach Anspruch 6, wobei die Steuer- bzw. Regelvorrichtung (45) ein elektrischer Schaltkreis ist, der von einer Stütz- bzw. Trägerplatte (61) gestützt bzw. getragen ist, die zur Verbindung mit dem Motor für das Stützen bzw. Tragen der Pumpengruppe (10) bestimmt ist, aus der der Impeller (12) hervorsteht.

8. Pumpengruppe nach einem der vorhergehenden Ansprüche, umfassend ein Drosselventil (7), das an Bord bzw. geräteseitig platziert ist.

9. Kühlungspumpe (1), umfassend:
- einen Pumpenkörper mit einer Impellerkammer; und
- eine Pumpengruppe (10) nach einem der vorhergehenden Ansprüche, die so an den Pumpenkörper gekoppelt ist, dass der Impeller (12) in der Impellerkammer untergebracht ist.

10. Pumpe nach Anspruch 9, wobei der Pumpenkörper von dem Motor getrennt und damit verbindbar ist, um in Position gestützt bzw. getragen zu sein.

11. Pumpe nach Anspruch 9, wobei der Pumpenkörper ein Abschnitt des Motors ist.

## Revendications

1. Groupe de pompes (1) pour un système de refroidissement (500) d'un moteur (550) d'un véhicule, comprenant
- une roue (12) tournant sur un axe de rotation (X),
- un arbre (13) qui s'étend le long de l'axe de rotation (X), sur lequel la roue (12) est montée de façon à pouvoir être en rotation avec l'arbre,
- un entraînement mécanique (4) comprenant un premier accouplement unidirectionnel (52) monté sur l'arbre (13) et une poulie (51) montée sur le premier accouplement (52),
- un entraînement électrique (5) comportant un deuxième accouplement unidirectionnel (43) monté sur l'arbre (13), un rotor (41) monté sur le deuxième accouplement (43) et un stator fixe (42) coaxial au rotor (41),
**caractérisé en ce que** la poulie (51) est une poulie électromagnétique normalement en prise avec l'entraînement mécanique et adaptée pour pouvoir être excitée électriquement pour séparer l'entraînement mécanique (5) de l'arbre (13).

2. Groupe de pompes selon la revendication 1, **caractérisé en ce que** la poulie (51) comprend une bague extérieure (51a) conçue pour être en prise avec une courroie de transmission, une bague intérieure (51b) du premier accouplement unidirectionnel (52) et un mécanisme intermédiaire de séparation qui comporte une bobine intermédiaire, ladite bobine étant adaptée pour pouvoir être excitée électriquement pour séparer, de façon rotative, la bague extérieure (51a) de la bague intérieure (51b).

3. Groupe de pompes selon la revendication 1 ou 2, **caractérisé en ce que** l'accouplement unidirectionnel (52) comprend aussi un roulement pour le support rotatif de l'arbre (13).

4. Groupe de pompes selon l'une quelconque des revendications précédentes, comprenant un carter extérieur (63), le stator (42) étant supporté par le carter (63).

5. Groupe de pompes selon l'une quelconque des revendications précédentes, **caractérisé en ce que** le deuxième accouplement unidirectionnel (43) comprend aussi un roulement pour le support rotatif de l'arbre (13).

6. Groupe de pompes selon l'une quelconque des revendications précédentes, comprenant un dispositif de commande électronique (45) pour commander l'entraînement électrique (4) et la poulie électromagnétique (51), le dispositif de commande (45) étant placé sur le groupe de pompes (10).

7. Groupe de pompes selon la revendication 6, **caractérisé en ce que** le dispositif de commande (45) est un circuit électronique supporté par une plaque de support (61) conçue pour une connexion avec le moteur pour le support du groupe de pompes (10), de laquelle la roue (12) dépasse.

8. Groupe de pompes selon l'une quelconque des revendications précédentes, comprenant une vanne papillon (7) disposé sur le groupe.

9. Pompe de refroidissement (1) comprenant
- un corps de pompe avec une chambre de roue et
- un groupe de pompes (10) selon l'une quelconque des revendications précédentes accouplé au corps de pompe de façon que la roue (12) soit logée dans la chambre de roue.

10. Pompe selon la revendication 9, **caractérisé en ce que** le corps de pompe est séparé du moteur et adapté pour pouvoir y être connecté pour être supporté en position.

11. Pompe selon la revendication 9, **caractérisé en ce que** le corps de pompe est une partie du moteur.
